# EUROPÄISCHE PATENTSCHRIFT

(11) **EP 3 587 857 B1**
(45) Veröffentlichungstag und Bekanntmachung des Hinweises auf die Patenterteilung: **06.04.2022**
(21) Anmeldenummer: 18178964.5
(22) Anmeldetag: 21.06.2018
(51) Int. Cl.: F16F 15/22, F16F 15/26

(54) **AUSGLEICHSWELLE UND VERFAHREN ZUR HERSTELLUNG EINER AUSGLEICHSWELLE**
BALANCE SHAFT AND METHOD FOR MANUFACTURING SAME
ARBRE D'ÉQUILIBRAGE ET PROCÉDÉ DE FABRICATION D'UN ARBRE D'ÉQUILIBRAGE

(43) Veröffentlichungstag der Anmeldung: 01.01.2020
(73) Patentinhaber: Hirschvogel Umformtechnik GmbH, 86920 Denklingen (DE)
(72) Erfinder: Fink, Klaus, 87657 Görisried (DE); Pichl, Markus, 82389 Böbing (DE)
(74) Vertreter: Müller Schupfner & Partner Patent- und Rechtsanwaltspartnerschaft mbB

(56) Entgegenhaltungen:
- EP-B1- 1 089 012
- WO-A1-2005/093286
- WO-A2-01/33105
- DE-A1- 3 705 346
- DE-A1-102007 009 800
- DE-A1-102008 026 204
- JP-A- H05 164 190
- JP-U- H0 335 350
- US-A1- 2003 013 534

## Beschreibung

Die vorliegende Erfindung betrifft eine Ausgleichswelle und ein Verfahren zur Herstellung einer Ausgleichswelle.

Ausgleichswellen sind aus dem Stand der Technik hinlänglich bekannt, beispielsweise aus der DE 10 2015 218 277 A1. Solche Ausgleichswellen dienen dem Ausgleich von Massenkräften und/oder Massenmomenten, die in einer Brennkraftmaschine durch eine Kurbelwelle bei deren Rotation verursacht werden. Dadurch lassen sich Betriebsgeräusche und Vibrationen der Brennkraftmaschine reduzieren. Zum Ausgleich der Massenkräfte sind an einem länglich ausgebildeten Grundkörper gezielt Unwuchtabschnitte ausgebildet, die bei der Rotation der Ausgleichswelle kompensierende Gegenkräfte zu den durch eine Kurbelwelle veranlassten Kräften bereitstellen. Dabei werden die Ausgleichswellen beispielsweise über Zahnräder oder Riemen synchron zur Kurbelwelle angetrieben. Je nach Bauform der Brennkraftmaschine werden ein oder zwei Ausgleichswellen benutzt bzw. die Ausgleichswelle wird mit einer Drehzahl oder einer doppelten Drehzahl der Kurbelwelle angetrieben.

Aus der WO 2005 093 286 A1 ist eine Ausgleichswelle für einen Mehrzylinder-Reihenmotor mit wenigstens zwei Unwuchtgewichtsabschnitten und wenigstens einer Lagerstelle bekannt, wobei die Unwuchtgewichtsabschnitte symmetrisch zur Lagerstelle angeordnet sind und wenigstens einer der Unwuchtgewichtsabschnitte mit einem von der Lagerstelle abgewandten Ende mit einem weiteren Wellenabschnitt verbunden ist. Dabei ist zwischen dem, von der Lagerstelle abgewandten Ende des wenigstens einen Unwuchtgewichtsabschnitts und dem weiteren Wellenabschnitt ein biegeweiches Koppelelement vorgesehen, das bei einer Drehung der Ausgleichswelle eine Auslenkung des Endes des angeschlossenen Unwuchtgewichtsabschnitts in Richtung der resultierenden Zentrifugalkräfte ermöglicht.

Die US 2003 013 534 offenbart ein weiteres Beispiel für eine Ausgleichwelle nach dem Stand der Technik, wobei die Ausgleichsweise einen Hauptlagerzapfen umfasst, der neben einem ersten Ende der Welle angeordnet ist, und einen Auslegerlagerzapfen, der neben dem zweiten Ende der Welle angeordnet ist.

Die DE 37 05 346 A1 betrifft eine Ausgleichswelle für die Verwendung in einem Mehrzylinder-Motor, die von einem Zylinderblock des Motors derart getragen ist, dass sie weitgehend parallel zu einer Kurbelwelle im Motor verläuft und so angetrieben ist, dass sie durch die Kurbelwelle gedreht ist.

Die JP H05 164190 A offenbart eine Ausgleichswelle, die von zwei Lagern getragen wird. Dabei weist die Ausgleichswelle pro Lager zwei Unwuchtabschitte auf, die zu beide Seiten der Lager angeordnet sind.

Aufgrund der im Betrieb, d. h. bei der Rotation der Ausgleichwelle um eine Rotationsachse, auftretenden Kräfte, deformiert bzw. verbiegt sich die Ausgleichswelle. Diese Verbiegung führt typischerweise zu einem Verkippen eines Lagerbereichs, über den die Ausgleichswelle rotierend um die Rotationsache mittels eines Lagers gelagert ist. Infolgedessen werden die Ausgleichswelle und das Lager im Lagerbereich ungleichmäßig belastet. Im Falle eines Antriebs der Ausgleichswelle über ein Zahnrad, wird dieses auch gegenüber der Rotationsache mitverkippt, so dass für die Zähne des Zahnrads im Betrieb eine ungleichmäßige Belastung hervorgerufen wird. Infolge der zusätzlichen Belastungen ist mit einem erhöhten Verschleiß zu rechnen bzw. es müssen aufwendig Nachbearbeitungen, beispielsweise an den Zähnen eines Antriebszahnrads, bei der Fertigung der Ausgleichswelle vorgenommen werden.

Es ist somit eine Aufgabe der vorliegenden Erfindung, eine Ausgleichswelle bereitzustellen, mit der sich eine Belastung und somit ein Verschleiß für die Ausgleichswelle und die Ausgleichswelle antreibenden und/oder lagernden Teile reduzieren lässt.

Diese Aufgabe wird gelöst durch eine Ausgleichswelle gemäß Anspruch 1, sowie ein Verfahren zum Herstellen einer Ausgleichswelle gemäß Anspruch 11.

Weitere Vorteile und Merkmale der Erfindung ergeben sich aus den Unteransprüchen sowie der Beschreibung und den beigefügten Figuren.

Erfindungsgemäß ist eine Ausgleichswelle zum Ausgleich von Massenkräften und/oder Massenmomenten, insbesondere zum Ausgleich von Massenkräften und/oder Massenmomenten einer Hubkolben-Brennkraftmaschine, umfassend:
- einen länglichen Grundkörper;
- zumindest einen am Grundkörper ausgebildeten Lagerbereich, über den die Ausgleichswelle zur rotierenden Lagerung um eine Rotationsachse mittels eines Lagers lagerbar ist; und- einen ersten Unwuchtabschnitt und einen zweiten Unwuchtabschnitt,
   -- deren Masseschwerpunkte jeweils außerhalb der Rotationsachse der Ausgleichswelle liegen und
   -- die am Grundkörper in Längsrichtung des Grundkörpers gesehen auf gegenüberliegenden Seiten des Lagerbereichs ausgebildeten sind; wobei im Betrieb der Ausgleichswelle der erste Unwuchtabschnitt gegenüber der Rotationsachse um einen ersten Winkel verkippt und der zweite Unwuchtabschnitt gegenüber der Rotationsachse um einen zweiten Winkel verkippt; wobei die Ausgleichswelle derart gestaltet ist, dass der erste Unwuchtabschnitt und der zweite Unwuchtabschnitt zur selben Seite verkippen, wobei die Ausgleichswelle einen weiteren Lagerbereich aufweist über den die Ausgleichswelle zur rotierenden Lagerung um die Rotationsachse mittels eines weiteren Lagers lagerbar ist; weiter umfassend,
- einen dritten Unwuchtabschnitt und einen vierten Unwuchtabschnitt,
   -- deren Masseschwerpunkte jeweils außerhalb der Rotationsachse der Ausgleichswelle liegen und
   -- die am Grundkörper in Längsrichtung des Grundkörpers gesehen auf gegenüberliegenden Seiten des weiteren Lagerbereichs ausgebildeten sind, wobei im Betrieb der Ausgleichswelle der dritte Unwuchtabschnitt gegenüber der Rotationsachse um einen dritten Winkel verkippt und der vierte Unwuchtabschnitt gegenüber der Rotationsachse um einen vierten Winkel verkippt, wobei die Ausgleichswelle derart gestaltet ist, dass der dritte Unwuchtabschnitt und der vierte Unwuchtabschnitt zur selben Seite verkippen,
dadurch gekennzeichnet, dass der zweite Winkel größer ist als der erste Winkel und der dritte Winkel größer ist als der vierte Winkel.

Gegenüber dem Stand der Technik erweist sich die erfindungsgemäße Ausgestaltung als vorteilhaft, weil durch die gleichgerichtete Verkippung des ersten Unwuchtabschnitts und des zweiten Unwuchtabschnitts im Lagerbereich eine Art Scheitelpunkt gebildet wird, der einer Verkippung des Lagerbereichs entgegenwirken kann. Durch das Verbiegen zur selben Seite wirken schließlich der erste Unwuchtabschnitt und der zweite Unwuchtabschnitt gegensinnig auf den Lagerbereich, wodurch das Verkippen des Lagerbereichs reduziert werden kann. Im Gegensatz dazu verbiegen bzw. verkippen bei den aus dem Stand der Technik bekannten Ausgleichswellen der erste Unwuchtabschnitt und der zweite Unwuchtabschnitt in entgegengesetzter Richtung von der Rotationsachse weg. Dadurch wirken der erste und der zweite Unwuchtabschnitt gleichsinnig auf den Lagerbereich und der Lagerbereich der Ausgleichswellen aus dem Stand der Technik wird mitgedreht bzw. mitverkippt.

Infolge der reduzierten Verkippung des Lagerbereichs lässt sich ein gleichmäßigerer Kontakt zwischen Lager und Lagerbereich einstellen, der sich positiv auf den Verschleiß von Ausgleichswelle und Lager uns somit deren Lebensdauer auswirkt. Im Falle eines Zahnrads zur Übertragung einer Antriebskraft auf die Ausgleichswelle reduziert die anspruchsgemäße Ausgestaltung zudem das Verkippen des Zahnrads. Infolgedessen bleiben die Zähne des Zahnrads so ausgerichtet, dass eine optimale Kraftübertragung möglich ist und die Belastung reduziert werden kann. Insbesondere ist es vorstellbar, dass auf aufwendige Nachbehandlungsschritte, wie ein Härten oder eine Beschichtung, bei der Fertigung des Zahnrads verzichtet werden kann. Dadurch lassen sich auch in vorteilhafter Weise die Fertigungskosten reduzieren.

Damit der erste und der zweite Unwuchtabschnitt zur selben Seite verdrehen, ist es insbesondere vorgesehen, dass die Ausgleichswelle entsprechend geformt bzw. gestaltet wird. Beispielsweise weist die Ausgleichswelle im Lagerbereich eine gezielte Materialschwächung, wie z. B. eine Einkerbung auf. Ferner ist eine Rippenstruktur vorstellbar, die sich entlang der Längsrichtung der Ausgleichswelle erstreckt. Diese im Wesentlichen zur Versteifung vorgesehene Rippenstruktur kann auch in axialer Richtung bzw. Längsrichtung des Grundkörpers moduliert sein, sich beispielsweise gezielt verjüngen oder verdicken. Dadurch lässt sich eine Steifigkeit lokal an der Ausgleichswelle einstellen. Ferner ist es vorstellbar, dass der erste Unwuchtabschnitt und/oder der zweite Unwuchtabschnitt in seiner Größe, seiner Form, beispielsweise in radialer oder axialer Richtung gesehen, und/oder seinem Gewicht derart ausgelegt sind, dass der erste Unwuchtabschnitt und der zweite Unwuchtabschnitt zur selben Seite, von der Rotationsachse aus gesehen, verkippen. Weiterhin ist es vorstellbar, dass die Lage bzw. Position/Abstand relativ zum Lagerbereich bzw. die in axialer Richtung bemessene Länge des ersten Unwuchtabschnitts und/oder des zweiten Unwuchtabschitts angepasst sind, um eine gewünschte Verbiegung zur selben Seite im Betrieb zu veranlassen. Vorzugsweise wird zur Bestimmung des optimalen Designs der Ausgleichswelle, die die gewünschte Verkippung veranlasst, eine Simulation durchgeführt, bei der die Hauptfunktionalität der Ausgleichswelle, nämlich Gegenmomente zu denen Massemomenten der Kurbelwelle zu erzeugen, mitberücksichtigt wird.

Insbesondere ist unter einem im Betrieb auftretenden Verkippen, ein solches Verbiegen bzw. Verformung zu verstehen, die bei einer Rotation mit einer Drehzahl von mehr als 5000 Umdrehungen pro Minute, beispielsweise bei 10.000 Umdrehungen pro Minute, zu beobachten ist. Weiterhin ist es vorzugsweise vorgesehen, dass die Ausrichtung des ersten Unwuchtabschnitts und die Ausrichtung des zweiten Unwuchtsabschnitts spiegelsymmetrisch zueinander in Bezug auf eine senkrecht zur Längsrichtung der Ausgleichswelle und durch den Lagerbereich verlaufenden Spiegelebene bzw. Symmetrieebene ausgerichtet sind. Unter einem Verkippen zur selben Seite wird auch eine leicht tordierte Lage des ersten Unwuchtabschnitts zum zweiten Unwuchtabschnitt verstanden. D. h. in Umlaufrichtung gesehen können der erste Unwuchtabschnitt und der zweite Unwuchtabschitt zueinander um einen Winkel kleiner als 40°, bevorzugt kleiner als 20° und besonders bevorzugt kleiner als 10° zueinander verdreht bzw. tordiert sein. Besonders bevorzugt liegen der erste Unwuchtabschnitt und der zweite Unwuchtabschnitt in Längsrichtung gesehen parallel zueinander, besonders bevorzugt auf einer Linie. Gemäß einer bevorzugten Ausführungsform der vorliegenden Erfindung ist es vorgesehen, dass eine Differenz zwischen dem ersten Winkel und dem zweiten Winkel, insbesondere deren absoluten Werten, kleiner ist als 0,8 mrad, bevorzugt kleiner als 0,5 mrad und besonders bevorzugt kleiner als 0,25 mrad. Durch eine möglichst identische absolute Größe des ersten Winkels und des zweiten Winkels lässt sich der Lagerbereich möglichst horizontal ausrichten, wodurch eine möglichst optimale Kontaktierung mit dem Lager möglich ist.

Erfindungsgemäß ist es vorgesehen, dass die Ausgleichswelle einen weiteren Lagerbereich aufweist, über den die Ausgleichswelle zur rotierenden Lagerung um die Rotationsachse mittels diesen weiteren Lagers lagerbar ist. Dazu umfasst die Ausgleichswelle
- einen dritten Unwuchtabschnitt und einen vierten Unwuchtabschitt,
   -- deren Masseschwerpunkte jeweils außerhalb der Rotationsachse der Ausgleichswelle liegen und
   -- die am Grundkörper in Längsrichtung des Grundkörpers gesehen auf gegenüberliegenden Seiten des weiteren Lagerbereichs ausgebildeten sind, wobei im Betrieb der Ausgleichswelle der dritte Unwuchtabschnitt gegenüber der Rotationsache um einen dritten Winkel verkippt und der vierte Unwuchtabschnitt gegenüber der Rotationsachse um einen vierten Winkel verkippt,
wobei die Ausgleichswelle derart gestaltet ist, dass der dritte Unwuchtabschnitt und der vierte Unwuchtabschnitt zur selben Seite verkippen. Vorzugsweise sind der erste Unwuchtabschnitt, der zweite Unwuchtabschnitt, der dritte Unwuchtabschnitt und der vierte Unwuchtabschnitt zur selben Seite hin verkippt, verbogen bzw. verdreht. Dadurch ergibt sich ein im Wesentlichen M- bzw. W-förmiger Verlauf bzw. eine M- bzw. W-förmige Biegelinie für die Ausgleichswelle im Betrieb. Der zweite Unwuchtabschnitt und der dritte Unwuchtabschnitt sind dabei vorzugsweise gemeinsam zwischen dem Lagerbereich und dem weiteren Lagerbereich angeordnet. Es ist dabei auch vorstellbar, dass der zweite und dritte Unwuchtabschnitt ineinander übergehen oder ein zusätzlicher Unwuchtabschnitt zwischen dem zweiten und dem dritten Unwuchtabschnitt ausgebildet ist. Weiterhin ist es vorstellbar, dass der zweite Winkel und der dritte Winkel bzw. der erste und der vierte Winkel im Wesentlichen identisch sind. Alternativ ist es auch denkbar, dass sich die einzelnen Winkel voneinander unterscheiden. Erfindungsgemäß ist es vorgesehen, dass der zweite Winkel größer ist als erste Winkel und der dritte Winkel größer ist als der vierte Winkel. Für eine möglichst waagerechte Ausrichtung des Zahnrads ist es in einer vorteilhaften Ausführungsform vorgesehen, dass der vierte Winkel kleiner ist als der erste Winkel, der zweite Winkel und der dritte Winkel. Es ist auch vorstellbar, dass die Ausgleichswelle derart ausgelegt ist, dass der erste Unwuchtabschnitt und/oder der vierte Unwuchtabschnitt im Betrieb im Wesentlichen horizontal bzw. waagerecht verlaufen. Weiterhin ist es vorstellbar, dass ein Abstand zwischen dem Lagerbereich und dem weiteren Lagerbereich angepasst wird, um das Verkippen im Betrieb zur selben Seite zu bedingen.

In einer weiteren Ausführungsform der vorliegenden Erfindung ist es vorgesehen, dass der erste Winkel, der zweite Winkel, der dritte Winkel und/oder der vierte Winkel kleiner als 1,03 mrad, bevorzugt kleiner als 1,00 mrad und besonders bevorzugt kleiner als 0,7 mrad ist. Insbesondere lässt sich auf diese Weise eine Verkippung des ersten bzw. des vierten Unwuchtsabschnitts so gering halten, dass eine Verkippung des Zahnrads, das sich in Längsrichtung gesehen an den ersten Unwuchtabschnitt oder den vierten Unwuchtabschnitt anschließt, kleiner ist als 1,013 ist, d. h. kleiner ist als diejenigen Verkippungen für das Zahnrad, die aus dem Stand der Technik bekannt sind. Dabei bestimmt sich der erste Winkel, der zweite Winkel, der dritte Winkel und der vierte Winkel insbesondere bei maximaler Rotationsbelastung, vorzugsweise bei einer Drehzahl von im Wesentlichen 10.000 Umdrehungen pro Minute.

In einer weiteren Ausführungsform der vorliegenden Erfindung ist es vorgesehen, dass die Ausgleichswelle mittels Urformen hergestellt, insbesondere geschmiedet oder gegossen ist. Dadurch lässt sich eine besonders stabile Ausgleichswelle bereitstellen, die den im Betrieb auftretenden Belastungen dauerhaft standhält.

Vorzugsweise ist es vorgesehen, dass im ersten Unwuchtabschnitt, im zweiten Unwuchtabschnitt, im dritten Unwuchtabschnitt und/oder im vierten Unwuchtabschnitt im Wesentlichen kein Material im Bereich der Rotationsachse der Ausgleichswelle vorgesehen ist. Weiterhin ist es vorstellbar, dass im Lagerbereich und/oder weiteren Lagerbereich im Wesentlichen kein Material im Bereich der Rotationsachse der Ausgleichswelle vorgesehen ist. Durch diese Materialreduktionen lässt sich in vorteilhafter Weise das Gewicht der Ausgleichswelle reduzieren. Beispielsweise umfasst die Ausgleichswelle hierzu Hohlbereiche.

In einer weiteren Ausführungsform ist es vorgesehen, dass ein senkrecht zur Längsrichtung bemessener Durchmesser des ersten Unwuchtabschnitts, des zweiten Unwuchtabschnitts, des dritten Unwuchtabschnitts und/oder des vierten Unwuchtabschnitts derart ausgestaltet ist, dass ein Laufring für dessen Montage über ein Ende der Ausgleichswelle aufziehbar und bis zum Lagerbereich und/oder weiteren Lagerbereich verschiebbar ist. Als Laufring ist insbesondere auch ein Innenring eines Lagers zu verstehen. Beispielsweise ist zwischen einer Stirnseite der Ausgleichswelle der erste Unwuchtabschnitt angeordnet. Wenn der erste Unwuchtabschnitt so dimensioniert ist, dass der Innendurchmesser des Laufrings bzw. des Innenrings des Lagers größer ist als der Unwuchtabschnitt an seiner breitesten Stelle lässt sich der einstückig und geschlossene Laufring über das Ende der Ausgleichswelle aufziehen und über den ersten Unwuchtabschnitt auffädeln und bis zum Lagerbereich verschieben. Es hat sich überraschender Weise herausgestellt, dass eine derartige Dimensionierung auch dann noch möglich ist, wenn die Ausgleichswelle dazu ausgelegt ist, mit dem ersten Unwuchtabschnitt und dem zweiten Unwuchtabschnitt zur selben Seite zu verkippen.

Vorzugsweise ist es vorgesehen, dass der ersten Unwuchtabschnitt und/oder der zweite Unwuchtabschnitt an den Lagerbereich angrenzen, insbesondere unmittelbar angrenzen. Beispielsweise wird auf Kragenelemente zur Begrenzung des Lagerbereichs verzichtet und der erste Unwuchtabschnitt und der zweite Unwuchtabschnitt verhindern einen axialen Versatz des Lagers. Es ist auch vorstellbar, dass durch das Verkippen des ersten Unwuchtabschnitts und des zweiten Unwuchtsabschnitt zur selben Seite der Lagerring bzw. der Innenring mit dem ersten Unwuchtabschnitt und dem zweiten Unwuchtabschnitt verklemmt wird, wodurch sich die Fixierung des Laufrings unterstützen lässt.

Weiterhin ist es bevorzugt vorgesehen, dass die Ausgleichwelle ein Zahnrad aufweist, insbesondere ein aus zwei verschiedenen Materialien gefertigtes Zahnrad aufweist. Beispielsweise umfasst das Zahnrad ein Kernbereich und einen Randbereich, wobei sich das Material des Kernbereichs von dem Material des Randbereichs unterscheidet. Ein solches Hybridrad erlaubt es beispielsweise ein vergleichsweise leichtes Metall für den Kernbereich zu verwenden, wodurch das Gesamtgewicht der Ausgleichswelle in vorteilhafter Weise reduziert werden kann. Dabei ist es vorstellbar dass durch die reduzierte Verkippung und damit die reduzierte Belastung des Zahnrads der Anteil des Kernbereichs am gesamten Zahnrad größer dimensioniert werden kann.

Vorzugsweise ist es vorgesehen, dass der Grundkörper einstückig ausgestaltet ist. Ein weiterer Gegenstand der vorliegenden Erfindung ist ein Verfahren zur Herstellung einer erfindungsgemäßen Ausgleichswelle zum Ausgleich von Massenkräften und/oder Massenmomenten, insbesondere zum Ausgleich von Massenkräften und/oder Massenmomenten einer Hubkolben-Brennkraftmaschine, umfassend:
- einen länglichen Grundkörper;
- zumindest einen am Grundkörper ausgebildeten Lagerbereich, über den die Ausgleichswelle zur rotierenden Lagerung um eine Rotationsachse mittels eines Lagers lagerbar ist; und
- einen ersten Unwuchtabschnitt und einen zweiten Unwuchtabschnitt,

-- deren Masseschwerpunkte jeweils außerhalb der Rotationsachse der Ausgleichswelle liegen und
-- die am Grundkörper in Längsrichtung des Grundkörpers gesehen auf gegenüberliegenden Seiten des Lagerbereichs ausgebildeten sind; wobei im Betrieb der Ausgleichswelle der erste Unwuchtabschnitt gegenüber der Rotationsachse um einen ersten Winkel verkippt und der zweite Unwuchtabschnitt gegenüber der Rotationsachse um einen zweiten Winkel verkippt; wobei die Ausgleichswelle derart gestaltet ist, dass der erste Unwuchtabschnitt und der zweite Unwuchtabschnitt zur selben Seite verkippen, wobei die Ausgleichswelle einen weiteren Lagerbereich aufweist über den die Ausgleichswelle zur rotierenden Lagerung um die Rotationsachse mittels eines weiteren Lagers lagerbar ist; weiter umfassend,
- einen dritten Unwuchtabschnitt und einen vierten Unwuchtabschnitt,
-- deren Masseschwerpunkte jeweils außerhalb der Rotationsachse der Ausgleichswelle liegen und
-- die am Grundkörper in Längsrichtung des Grundkörpers gesehen auf gegenüberliegenden Seiten des weiteren Lagerbereichs ausgebildeten sind, wobei im Betrieb der Ausgleichswelle der dritte Unwuchtabschnitt gegenüber der Rotationsachse um einen dritten Winkel verkippt und der vierte Unwuchtabschnitt gegenüber der Rotationsachse um einen vierten Winkel verkippt, wobei die Ausgleichswelle derart gestaltet ist, dass der dritte Unwuchtabschnitt und der vierte Unwuchtabschnitt zur selben Seite verkippen,
dadurch gekennzeichnet, dass der zweite Winkel größer ist als der erste Winkel und der dritte Winkel größer ist als der vierte Winkel.

Alle für die erfindungsgemäße Ausgleichswelle beschriebenen Merkmale und deren Vorteile lassen sich sinngemäß ebenfalls auf das erfindungsgemäße Verfahren übertragen und andersherum.

Vorzugsweise ist es vorgesehen, dass die Form der Ausgleichswelle durch eine Simulation ermittelt wird. Insbesondere ist es vorgesehen, dass in einem vorbereiten Schritt, Simulationen durchgeführt, werden, die unter Berücksichtigung der primären Funktion der Ausgleichswelle, nämlich dem Kompensieren der von der Kurbelwelle ausgehenden Kräfte, den ersten Unwuchtabschnitt, den zweiten Unwuchtabschnitt, den dritten Unwuchtabschnitt und den vierten Unwuchtabschnitt für eine m- bzw. w-förmige Biegelinie entsprechend dimensionieren.

Weitere Vorteile und Merkmale ergeben sich aus der nachfolgenden Beschreibung bevorzugter Ausführungsformen des erfindungsgemäßen Gegenstands mit Bezug auf die beigefügten Figuren. Einzelne Merkmale der einzelnen Ausführungsformen können dabei im Rahmen der Erfindung miteinander kombiniert werden.

Es zeigt:
- **Fig.1:**: schematische Darstellung einer Ausgleichswelle gemäß dem Stand der Technik und
- **Fig.2:**: schematische Darstellung einer Ausgleichswelle gemäß einer bevorzugten Ausführungsform der vorliegenden Erfindung

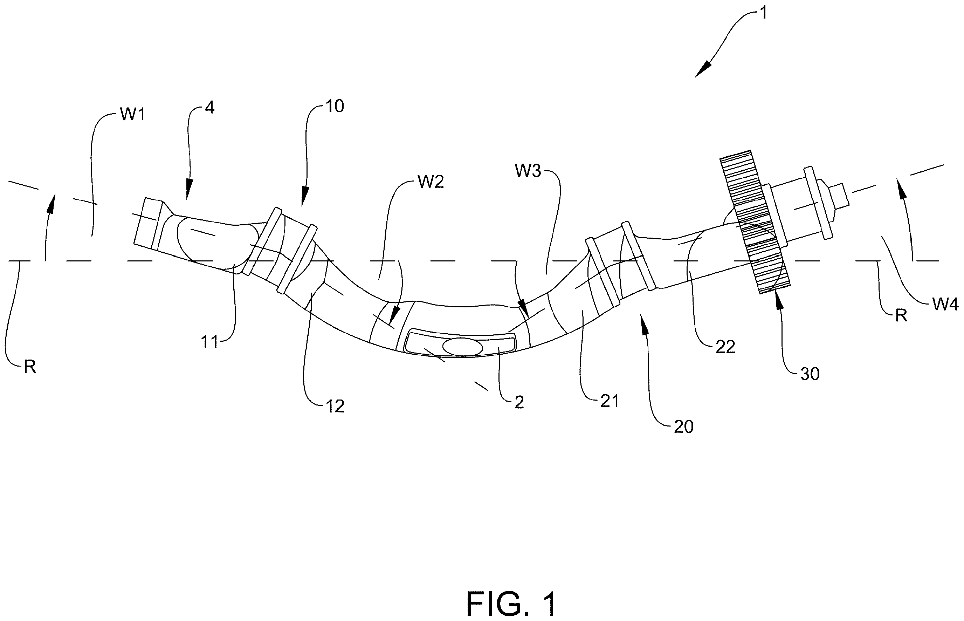

In **Figur 1** ist schematisch eine Ausgleichswelle 1 gemäß dem Stand der Technik dargestellt. Solche Ausgleichswellen 1 dienen insbesondere zum Ausgleich von Massenkräften und/oder Massenmomenten, insbesondere zum Ausgleich von Massenkräften und/oder Massenmomenten einer Hubkolben-Brennkraftmaschine, um Betriebsgeräusch und Vibrationen zu reduzieren und so den Fahrkomfort zu erhöhen. Dazu werden gezielt Unwuchtabschnitte 11, 12, 21, 22 an der Ausgleichswelle 1 ausgebildet, die Massenkräfte bzw. Massemomente erzeugen, die denjenigen einer Kurbelwelle der Brennkraftmaschine entgegenwirken. In dem dargestellten Beispiel in Figur 1 umfasst die Ausgleichswelle 1 einen länglichen Grundkörper 2, an dem ein erster Unwuchtabschnitt 11, ein zweiter Unwuchtabschnitt 12, ein dritter Unwuchtabschnitt 21 und ein vierter Unwuchtabschnitt 22 ausgebildet sind. Zwischen dem ersten Unwuchtabschnitt 11 und dem zweiten Unwuchtabschnitt 12 ist dabei ein Lagerbereich 10 und zwischen dem dritten Unwuchtabschnitt 21 und dem vierten Unwuchtabschnitt 22 ist ein weiterer Lagerbereich 20 ausgebildet. Der Lagerbereich 10 und der weitere Lagerbereich 20 sind als Kontaktbereiche vorgesehen, über die die Ausgleichswelle 1 mittels eines Lagers (hier nicht dargestellt), beispielsweise einem Radiallager, wie einem Nadellager, rotierend um eine Rotationsachse R lagerbar ist. Es ist dabei vorstellbar, dass die Lagerbereiche in axialer Richtung gesehen durch ein erstes Kragenelement und ein zweites Kragenelement begrenzt sind, um einen axialen Versatz des Lagers zu verhindern, oder der erste Unwuchtabschnitt 11 und der zweite Unwuchtabschitt 12 grenzen unmittelbar an den Lagerbereich 10 an, um den axialen Versatz des Lagers zu unterbinden.

Die Ausgleichswellen 1 werden durch Zahnräder 30, Ketten oder Zahnriemen von der Kurbelwelle synchron angetrieben. Je nach Bauart der Brennkraftmaschine verwendet man meist eine oder zwei Ausgleichswellen 1, die mit einfacher oder doppelter Kurbelwellendrehzahl laufen.

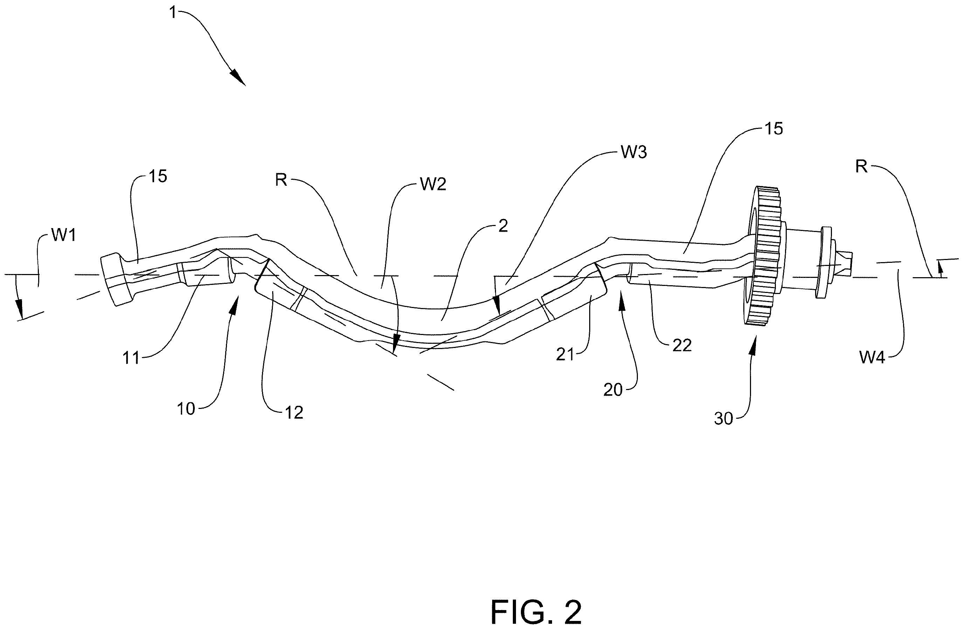

Die Figur 1 zeigt des Weiteren die Ausgleichswelle 1 im Betrieb, d. h. in einem Zustand in dem die Ausgleichswelle 1 um die Rotationsache R rotiert. Beispielsweise wird die Ausgleichswelle 1 mit 5400 Umdrehung pro Minute gedreht. In Folge dieser Rotation treten durch die bei der Rotation auftretenden Kräfte Verbiegungen in der Ausgleichswelle, d. h. eine Verformung entlang einer Biegelinie, auf, die in der Figur 1 zum besseren Verständnis übertrieben dargestellt sind bzw. ist. Die unterschiedlichen Graustufen in den Figuren 1 und 2 kennzeichnen entsprechende Kraftverläufe bzw. lokale Belastungen in der Ausgleichswelle 1. Insbesondere verkippen der erste Unwuchtabschnitt 11, der zweite Unwuchtabschnitt 12, der dritte Unwuchtabschnitt 21 und der vierte Unwuchtabschnitt 22 gegenüber der Rotationsachse R. Dabei verkippen der erste Unwuchtabschnitt 11 und der zweite Unwuchtabschnitt 12 in entgegengesetzte Richtung, d.h. zu gegenüberliegenden Seiten, sodass auch der zwischen dem ersten Unwuchtabschnitt 11 und dem zweiten Unwuchtabschnitt 12 angeordnete Lagerbereich verkippt. Infolgedessen wird der Lagerbereich gegenüber seinem Lager, mit denen die Ausgleichswelle gelagert wird, verkippt, wodurch keine gleichmäßige Anlage zwischen Lagerbereich 10 und Lager sichergestellt werden kann. Folge ist eine höhere Belastung bzw. einer erhöhter Verschleiß des Systems aus Ausgleichswelle 1 und Lager. Das gleiche gilt für den dritten Unwuchtabschnitt 21 und den vierten Unwuchtabschnitt 22 mit dem weiteren Lagerbereich 20.

In der Figur 2 ist schematische eine Ausgleichswelle 1 gemäß einer bevorzugten Ausführungsform der vorliegenden Erfindung dargestellt. Die Ausgleichswelle 1 in Figur 2 zeigt ebenfalls die Situation, die sich im Betrieb der Ausgleichswelle 1 einstellt. Es hat sich gezeigt, dass sich der erste Unwuchtabschnitt 21 und/oder der zweite Unwuchtabschnitt 22 derart gestalten lassen, insbesondere in Hinblick auf Form, Größe und/oder Lager, dass der erste Unwuchtabschnitte 11 und der zweite Unwichtabschnitt 12 im Betrieb in dieselbe Richtung bzw. zur selben Seite verkippen. Im dargestellten Ausfürhungsbeispiel verkippen der erste Unwuchtabschnitt 11 und der zweite Unwuchtabschnitt 12 nach unten. Dadurch wird der Lagerbereich 30 zwischen dem ersten Unwuchtabschnitt 11 und dem zweiten Unwuchtabschnitt 12 weniger verkippt, und eine gleichmäßigere Beanspruchung von Ausgleichswelle 1 und Lager lässt sich realisieren, die sich vorteilhaft auf die Lebensdauer der Ausgleichswelle 1 bzw. die Lager auswirkt. Gleiches lässt sich ebenfalls für den dritten Unwuchtabschnitt 21 und den vierten Unwuchtabschnitt 22 sowie den dazwischen gelegenen weiteren Lagerbereich 20 realisieren. Insbesondere bildet sich ein W-förmiger Verlauf bzw. eine W-förmige Biegelinie für die Ausgleichswelle 1 aus. Als vorteilhaft hat sich im Besonderen herausgestellt, dass durch die gezielte Verkippung der einzelnen Unwuchtsabschnitte 11, 12, 21, 22 im Betrieb ein Zahnrad am Ende der Ausgleichswelle weniger verkippt wird. Insbesondere ist der vierte Winkel für die Ausgleichswelle in Figur 2 kleiner als der vierte Winkel in der Figur 1. Entsprechend wird die Verzahnung des Zahnrads 30 weniger beansprucht. Dadurch lässt sich beispielsweise auf eine aufwendige Nachbearbeitung der Zähne, beispielsweise in Form eines Härtens oder eines Beschichtens, bei deren Fertigung verzichten.

Um ein Verkippen des ersten Unwuchtabschnitts 11, des zweiten Unwuchtabschnitts 12, des dritten Unwuchtabschnitts 21 und der vierten Unwuchtabschnitts 22 in dieselbe Richtung bzw. zur selben Seite zu realiseren, ist es vorzugsweise vorgesehen, dass deren Form und/oder Position entsprechend so ausgelegt wird, dass sich im Betrieb die gewünschte Verkippung einstellt. Dabei ist es vorstellbar, dass ein Abstand zwischen dem Lagerbereich 10 und dem weiteren Lagerbereich 20 mitberücksichtigt wird oder eine Rippenstruktur 15, die sich entlang der Ausgleichswelle über den ersten Unwuchtabschnitt 11, den zweiten Unwuchtabschnitt 12, den dritten Unwuchtabschnitt 21 und den vierten Unwuchtabschnitt 22 erstreckt. Vorzugsweise wird die Rippenstruktur 15 zur Versteifung genutzt. Durch ein gezieltes Modifizieren oder Variieren der Rippenstruktur15 lässt sich beispielsweise Einfluss nehmen auf eine lokale Steifigkeit der Ausgleichswelle 1. Weiterhin ist es vorstellbar, dass durch eine gezielte Gewichtserhöhung 21 im ersten Unwuchtabschnitts 11 die gewünschte Verkippung erzielen lässt.

Weiterhin ist es vorgesehen, dass im Betrieb der erste Unwuchtabschnitt 11 um einen ersten Winkel W1 der zweiten Unwuchtabschnitt 12 um einen zweiten Winkel W2, der dritte Unwuchtabschnitt 21 um einen dritten Winkel W3 und der vierte Unwuchtabschnitt 22 um einen vierten Winkel W4 gegenüber der Rotationsachse R verkippt. Dabei ist es insbesondere möglich, dass der erste Winkel W1, der zweite Winkel W2, der dritte Winkel W3 und der vierte Winkel W4 kleiner sind als 1 mrad, beispielsweise maximal zwischen 0,3 mrad und 1 mrad liegt. Es ist weiterhin vorstellbar, dass die Ausgleichswelle so ausgelegt wird, dass der vierte Winkel W4 kleiner ist als der erste Winkel W1, der zweite Winkel W2 und/oder der dritte Winkel W3. Dadurch lässt sich sicherstellen, dass die Verkippung des Zahnrads 30 möglichst gering ist.

### Bezugszeichenliste:

- 1: Ausgleichswelle
- 4: Ende der Ausgleichswelle
- 10: Lagerbereich
- 11: erster Unwuchtabschnitt
- 12: zweiter Unwuchtabschnitt
- 15: Rippenstruktur
- 20: weiterer Lagerbereich
- 21: dritter Unwuchtabschnitt
- 22: vierter Unwuchtabschnitt
- 30: Zahnrad
- R: Rotationsache

## Patentansprüche

1. Ausgleichswelle (1) zum Ausgleich von Massenkräften und/oder Massenmomenten, insbesondere zum Ausgleich von Massenkräften und/oder Massenmomenten einer Hubkolben-Brennkraftmaschine, umfassend:
- einen länglichen Grundkörper (2);
- zumindest einen am Grundkörper (2) ausgebildeten Lagerbereich (10), über den die Ausgleichswelle (1) zur rotierenden Lagerung um eine Rotationsachse (R) mittels eines Lagers lagerbar ist; und
- einen ersten Unwuchtabschnitt (11) und einen zweiten Unwuchtabschnitt (12),
-- deren Masseschwerpunkte jeweils außerhalb der Rotationsachse (R) der Ausgleichswelle (1) liegen und
-- die am Grundkörper (2) in Längsrichtung des Grundkörpers gesehen auf gegenüberliegenden Seiten des Lagerbereichs (10) ausgebildeten sind;
wobei im Betrieb der Ausgleichswelle (10) der erste Unwuchtabschnitt (11) gegenüber der Rotationsachse (R) um einen ersten Winkel (W1) verkippt und der zweite Unwuchtabschnitt (12) gegenüber der Rotationsachse (R) um einen zweiten Winkel (W2) verkippt;
wobei die Ausgleichswelle (1) derart gestaltet ist, dass der erste Unwuchtabschnitt (11) und der zweite Unwuchtabschnitt (12) zur selben Seite verkippen,
wobei die Ausgleichswelle (1) einen weiteren Lagerbereich (20) aufweist über den die Ausgleichswelle (1) zur rotierenden Lagerung um die Rotationsachse (R) mittels eines weiteren Lagers lagerbar ist; weiter umfassend,
- einen dritten Unwuchtabschnitt (21) und einen vierten Unwuchtabschnitt (22),
-- deren Masseschwerpunkte jeweils außerhalb der Rotationsachse (R) der Ausgleichswelle (1) liegen und
-- die am Grundkörper (2) in Längsrichtung des Grundkörpers (2) gesehen auf gegenüberliegenden Seiten des weiteren Lagerbereichs (20) ausgebildeten sind,
wobei im Betrieb der Ausgleichswelle (1) der dritte Unwuchtabschnitt (21) gegenüber der Rotationsachse (R) um einen dritten Winkel (W3) verkippt und der vierte Unwuchtabschnitt (22) gegenüber der Rotationsachse (R) um einen vierten Winkel (W4) verkippt
wobei die Ausgleichswelle (1) derart gestaltet ist, dass der dritte Unwuchtabschnitt (21) und der vierte Unwuchtabschnitt (22) zur selben Seite verkippen, **dadurch gekennzeichnet, dass** der zweite Winkel (W2) größer ist als der erste Winkel (W1) und der dritte Winkel (W3) größer ist als der vierte Winkel (W4).

2. Ausgleichswelle (1) gemäß Anspruch 1, wobei eine Differenz zwischen dem ersten Winkel (W1) und dem zweiten Winkel (W2) kleiner als 0,8 mrad, bevorzugt kleiner als 0,5 mrad und besonders bevorzugt kleiner als 0,25 mrad ist.

3. Ausgleichswelle gemäß einem der vorhergehenden Ansprüche, wobei der erste Winkel (W1), der zweite Winkel (W2), der dritte Winkel (W3) und/oder der vierte Winkel (W4) kleiner als 1,03 mrad, bevorzugt kleiner als 1,00 mrad und besonders bevorzugt kleiner als 0,7 mrad ist.

4. Ausgleichswelle (1) gemäß einem der vorhergehenden Ansprüche, wobei die Ausgleichswelle (1) geschmiedet oder gegossen ist.

5. Ausgleichswelle (1) gemäß einem der vorhergehenden Ansprüche, wobei im ersten Unwuchtabschnitt (11), im zweiten Unwuchtabschnitt (12), im dritten Unwuchtabschnitt (21) und/oder im vierten Unwuchtabschnitt (22) im Wesentlichen kein Material im Bereich der Rotationsachse (R) der Ausgleichswelle (1) vorgesehen ist.

6. Ausgleichswelle (1) gemäß einem der vorhergehenden Ansprüche, wobei im Lagerbereich (10) und/oder weiteren Lagerbereich (20) im Wesentlichen kein Material im Bereich der Rotationsachse (R) der Ausgleichswelle (1) vorgesehen ist.

7. Ausgleichswelle (1) gemäß einem der vorgehenden Ansprüche, wobei ein senkrecht zur Längsrichtung der Ausgleichswelle (1) bemessener Durchmesser des ersten Unwuchtabschnitts (11), des zweiten Unwuchtabschnitts (12), des dritten Unwuchtabschnitts (21) und/oder des vierten Unwuchtabschnitts (22) derart ausgestaltet ist, dass ein Laufring für dessen Montage über ein Ende (4) der Ausgleichswelle (1) aufziehbar und bis zum Lagerbereich (10) und/oder weiteren Lagerbereich (20) verschiebbar ist.

8. Ausgleichswelle (1) gemäß einem der vorhergehenden Ansprüche, wobei
- der ersten Unwuchtabschnitt (11) und/oder der zweite Unwuchtabschnitt (12) an den Lagerbereich (10) und/oder
- der dritte Unwuchtabschnitt (21) und/oder der vierte Unwuchtabschnitt (22) an den weiteren Lagerbereich (20)
angrenzen.

9. Ausgleichswelle (1) gemäß einem der vorhergehenden Ansprüche, wobei die Ausgleichwelle (1) ein Zahnrad (30), insbesondere ein aus zwei verschiedenen Materialien gefertigtes Zahnrad (30) aufweist.

10. Ausgleichswelle (1) gemäß einem der vorhergehenden Ansprüche, wobei der Grundkörper (2) einstückig ausgestaltet ist.

11. Verfahren zur Herstellung einer Ausgleichswelle (1) gemäß einem der vorhergehenden Ansprüche.

12. Verfahren gemäß Anspruch 11, wobei die Form der Ausgleichswelle (1), insbesondere des ersten Unwuchtabschnitts (11) und/oder des zweiten Unwuchtabschnitts (12) durch eine Simulation ermittelt wird.

## Claims

1. Balance shaft (1) for balancing mass forces and/or mass moments, in particular for balancing mass forces and/or mass moments of a reciprocating internal combustion engine, comprising:
- an elongated base body (2);
- at least one bearing region (10) which is formed on the base body (2) and via which the balance shaft (1) can be beard by means of a bearing for rotational bearing about an axis of rotation (R); and
- a first unbalance section (11) and a second unbalance section (12),
-- whose centres of mass each lie outside the axis of rotation (R) of the balance shaft (1), and
-- which are formed on the base body (2) on opposite sides of the bearing region (10) as seen in the longitudinal direction of the base body;
wherein, during operation of the balance shaft (10), the first unbalance section (11) tilts with respect to the axis of rotation (R) by a first angle (W1) and the second unbalance section (12) tilts with respect to the axis of rotation (R) by a second angle (W2);
wherein the balance shaft (1) is configured such that the first unbalance section (11) and the second unbalance section (12) tilt to the same side, wherein the balance shaft (1) has a further bearing region (20) via which the balance shaft (1) can be beard by means of a further bearing for rotational bearing about the axis of rotation (R); further comprising
- a third unbalance section (21) and a fourth unbalance section (22),
-- whose centres of mass each lie outside the axis of rotation (R) of the balance shaft (1), and
-- which are formed on the base body (2) on opposite sides of the further bearing region (20) as seen in the longitudinal direction of the base body (2),
wherein during operation of the balance shaft (1) the third unbalance section (21) tilts by a third angle (W3) relative to the axis of rotation (R) and the fourth unbalance section (22) tilts by a fourth angle (W4) relative to the axis of rotation (R)
wherein the balance shaft (1) is configured such that the third unbalance section (21) and the fourth unbalance section (22) tilt to the same side, **characterised in that** the second angle (W2) is greater than the first angle (W1) and the third angle (W3) is greater than the fourth angle (W4).

2. Balance shaft (1) according to claim 1, wherein a difference between the first angle (W1) and the second angle (W2) is smaller than 0.8 mrad, preferably smaller than 0.5 mrad and particularly preferably smaller than 0.25 mrad.

3. Balance shaft according to one of the preceding claims, wherein the first angle (W1), the second angle (W2), the third angle (W3) and/or the fourth angle (W4) is smaller than 1.03 mrad, preferably smaller than 1.00 mrad and particularly preferably smaller than 0.7 mrad.

4. Balance shaft (1) according to one of the preceding claims, wherein the balance shaft (1) is forged or cast.

5. Balance shaft (1) according to one of the preceding claims, wherein in the first unbalance section (11), in the second unbalance section (12), in the third unbalance section (21) and/or in the fourth unbalance section (22) substantially no material is provided in the region of the axis of rotation (R) of the balance shaft (1).

6. Balance shaft (1) according to one of the preceding claims, wherein essentially no material is provided in the bearing region (10) and/or further bearing region (20) in the area of the axis of rotation (R) of the balance shaft (1).

7. Balance shaft (1) according to one of the preceding claims, wherein a diameter, dimensioned perpendicularly to the longitudinal direction of the balance shaft (1), of the first unbalance section (11), of the second unbalance section (12), of the third unbalance section (21) and/or of the fourth unbalance section (22) is designed in such a way that a race can be pulled over one end (4) of the balance shaft (1) for its assembly and can be displaced as far as the bearing region (10) and/or further bearing region (20).

8. Balance shaft (1) according to any one of the preceding claims, wherein
- the first unbalance section (11) and/or the second unbalance section (12) to the bearing region (10) and/or
- the third unbalance section (21) and/or the fourth unbalance section (22) adjoin the further bearing region (20).

9. Balance shaft (1) according to one of the preceding claims, wherein the balance shaft (1) comprises a gear wheel (30), in particular a gear wheel (30) made of two different materials.

10. Balance shaft (1) according to one of the preceding claims, wherein the base body (2) is formed in one piece.

11. A method of manufacturing a balance shaft (1) according to any one of the preceding claims.

12. Method according to claim 11, wherein the shape of the balance shaft (1), in particular of the first unbalance section (11) and/or of the second unbalance section (12), is determined by a simulation.

## Revendications

1. Arbre d'équilibrage (1) pour équilibrer les forces d'inertie et/ou les moments d'inertie, en particulier pour équilibrer les forces d'inertie et/ou les moments d'inertie d'un moteur à combustion interne à piston(s) alternatif(s), comprenant :
- un corps de base allongé (2) ;
- au moins une zone de palier (10) formée sur le corps de base (2), par l'intermédiaire de laquelle l'arbre d'équilibrage (1) peut être monté au moyen d'un palier pour un montage en rotation autour d'un axe de rotation (R) ; et
- une première portion formant balourd (11) et une deuxième portion formant balourd (12),
-- dont les centres de masse se trouvent chacun en dehors de l'axe de rotation (R) de l'arbre d'équilibrage (1) et
-- qui sont formées sur le corps de base (2), sur des côtés opposés de la zone de palier (10), vus en direction longitudinale du corps de base ;
dans lequel
pendant le fonctionnement de l'arbre d'équilibrage (10), la première portion formant balourd (11) bascule d'un premier angle (W1) par rapport à l'axe de rotation (R), et la deuxième portion formant balourd (12) bascule d'un deuxième angle (W2) par rapport à l'axe de rotation (R) ;
l'arbre d'équilibrage (1) est conçu de telle sorte que la première portion formant balourd (11) et la deuxième portion formant balourd (12) basculent vers le même côté,
l'arbre d'équilibrage (1) présente une autre zone de palier (20) par l'intermédiaire de laquelle l'arbre d'équilibrage (1) peut être monté au moyen d'un autre palier pour le montage en rotation autour de l'axe de rotation (R) ;
comprenant en outre :
- une troisième portion formant balourd (21) et une quatrième portion formant balourd (22),
-- dont les centres de masse se trouvent chacun en dehors de l'axe de rotation (R) de l'arbre d'équilibrage (1) et
-- qui sont formées sur le corps de base (2), sur des côtés opposés de l'autre zone de palier (20), vus en direction longitudinale du corps de base (2),
dans lequel
pendant le fonctionnement de l'arbre d'équilibrage (1), la troisième portion formant balourd (21) bascule d'un troisième angle (W3) par rapport à l'axe de rotation (R) et la quatrième portion formant balourd (22) bascule d'un quatrième angle (W4) par rapport à l'axe de rotation (R),
l'arbre d'équilibrage (1) est conçu de telle sorte que la troisième portion formant balourd (21) et la quatrième portion formant balourd (22) basculent vers le même côté,
**caractérisé en ce que** le deuxième angle (W2) est supérieur au premier angle (W1), et le troisième angle (W3) est supérieur au quatrième angle (W4).

2. Arbre d'équilibrage (1) selon la revendication 1,
dans lequel une différence entre le premier angle (W1) et le deuxième angle (W2) est inférieure à 0,8 mrad, de préférence inférieure à 0,5 mrad et de manière particulièrement préférée inférieure à 0,25 mrad.

3. Arbre d'équilibrage selon l'une des revendications précédentes,
dans lequel le premier angle (W1), le deuxième angle (W2), le troisième angle (W3) et/ou le quatrième angle (W4) est inférieur à 1,03 mrad, de préférence inférieur à 1,00 mrad et de manière particulièrement préférée inférieur à 0,7 mrad.

4. Arbre d'équilibrage (1) selon l'une des revendications précédentes, dans lequel l'arbre d'équilibrage (1) est forgé ou coulé.

5. Arbre d'équilibrage (1) selon l'une des revendications précédentes, dans lequel, dans la première portion formant balourd (11), dans la deuxième portion formant balourd (12), dans la troisième portion formant balourd (21) et/ou dans la quatrième portion formant balourd (22), il n'est prévu sensiblement aucun matériau au niveau de l'axe de rotation (R) de l'arbre d'équilibrage (1).

6. Arbre d'équilibrage (1) selon l'une des revendications précédentes, dans lequel, dans la zone de palier (10) et/ou dans l'autre zone de palier (20), il n'est prévu sensiblement aucun matériau au niveau de l'axe de rotation (R) de l'arbre d'équilibrage (1).

7. Arbre d'équilibrage (1) selon l'une des revendications précédentes, dans lequel un diamètre de la première portion formant balourd (11), de la deuxième portion formant balourd (12), de la troisième portion formant balourd (21) et/ou de la quatrième portion formant balourd (22), dimensionné perpendiculairement à la direction longitudinale de l'arbre d'équilibrage (1), est conçu de telle sorte qu'une bague de roulement peut être enfilée sur une extrémité (4) de l'arbre d'équilibrage (1) pour son montage et peut être déplacée jusque dans la zone de palier (10) et/ou l'autre zone de palier (20).

8. Arbre d'équilibrage (1) selon l'une des revendications précédentes,
dans lequel
- la première portion formant balourd (11) et/ou la deuxième portion formant balourd (12) sont adjacentes à la zone de palier (10), et/ou
- la troisième portion formant balourd (21) et/ou la quatrième portion formant balourd (22) sont adjacentes à l'autre zone de palier (20).

9. Arbre d'équilibrage (1) selon l'une des revendications précédentes, dans lequel l'arbre d'équilibrage (1) comprend une roue dentée (30), en particulier une roue dentée (30) fabriquée à partir de deux matériaux différents.

10. Arbre d'équilibrage (1) selon l'une des revendications précédentes, dans lequel le corps de base (2) est réalisé d'un seul tenant.

11. Procédé de fabrication d'un arbre d'équilibrage (1) selon l'une des revendications précédentes.

12. Procédé selon la revendication 11,
dans lequel la forme de l'arbre d'équilibrage (1), en particulier de la première portion formant balourd (11) et/ou de la deuxième portion formant balourd (12), est déterminée par une simulation.
